# EUROPÄISCHE PATENTSCHRIFT

(11) **EP 1 856 418 B1**
(45) Veröffentlichungstag und Bekanntmachung des Hinweises auf die Patenterteilung: **19.08.2009**
(21) Anmeldenummer: 06723246.2
(22) Anmeldetag: 06.03.2006
(51) Int. Cl.: F16B 37/12, F16B 9/02, F16L 19/06

(54) **KLEMMHÜLSE UND KLEMMVERBINDUNG**
CLAMPING SLEEVE AND CLAMP CONNECTION
DOUILLE DE SERRAGE ET LIAISON PAR SERRAGE

(30) Priorität: 07.03.2005 DE 202005003812 U
(43) Veröffentlichungstag der Anmeldung: 21.11.2007
(73) Patentinhaber: Böhl, Harald, 35285 Gemünden-Grüsen (DE)
(72) Erfinder: Böhl, Harald, 35285 Gemünden-Grüsen (DE)
(74) Vertreter: Buchhold, Jürgen
(86) Internationale Anmeldenummer: PCT/EP2006/002046
(87) Internationale Veröffentlichungsnummer: WO 2006/094749

(56) Entgegenhaltungen:
- GB-A- 540 859
- GB-A- 1 021 679
- GB-A- 2 237 615
- PATENT ABSTRACTS OF JAPAN Bd. 1997, Nr. 03, 31. März 1997 (1997-03-31) & JP 08 312623 A (SASAKI NOBUYUKI), 26. November 1996 (1996-11-26) in der Anmeldung erwähnt

## Beschreibung

Die Erfindung betrifft eine Klemmhülse gemäß dem Oberbegriff von Anspruch 1 sowie eine damit herstellbare Klemmverbindung nach Anspruch 13.

Zum Klemmen beispielsweise zylindrischer Stäbe, Rohre u.dgl. dienen vielfach Hülsen, Stellringe o.dgl., die wenigstens eine radial eingesetzte Steil- oder Druckschraube aufweisen. Wird diese angezogen, so drückt ihr Ende auf den eingespannten Stab, der dadurch an die gegenüberliegende Innenwand der Hülse bzw. des Ringes gepreßt wird. Man fügt ein Druckstück dazwischen, um am geklemmten Teil eine Deformation zu vermeiden, die nicht nur eine Druckstelle bewirken kann, sondern eventuell auch eine Beschädigung herbeiführt, etwa an einem eingeklemmten Rohrende.

Andere Klemmverbindungen erfordern mehrere Bauteile, typisch mindestens drei, und/ oder konische Gegenkonturen. Damit Rundmaterial von einer geteilten Buchse umfaßt und gespannt wird, ist es üblich, z.B. gemäß JP 08312623 A konische Gewindesegmente in der Art einer Kralle mittels einer Spannmutter auf den zu klemmenden Stab zu pressen. Ähnlich sieht FR 1 118 539 A eine mit mehreren Längsschlitzen versehene Schraubhülse vor, deren Ende konisch zuläuft, damit man es in einer Mutter mit Gegenkonus auf ein in der Hülse geführtes Rohr drücken kann. Laut FR 2 086 877 A wird eine längsgeschlitzte, mit Außengewinde versehene Buchse, deren Innendurchmesser nur wenig größer ist als der Außendurchmesser eines zu klemmenden Stabs, auf diesen von zwei Kontermuttern bzw. Gegengewinden gepreßt. Bei all diesen Vorrichtungen wird das zu klemmende Teil nur auf kurzer Länge radial gespannt, was bei größerer Beanspruchung ungenügend sein kann. Klebungen können daher notwendig sein, um eine Klemmung nicht bloß anfänglich, sondern dauerhaft zu bewirken, auch wenn im Gebrauch unvorhergesehene Kräfte oder Momente auftreten.

Es ist ein wichtiges Ziel der Erfindung, einfache Mittel zum Klemmen insbesondere längsausgedehnter Teile zu schaffen, die in allgemein ortsfest oder auch beweglich angeordneten Trägern, Balken, Rohren u.dgl. dauerhaft stabil gehalten werden sollen. Angestrebt wird eine rasche und komplikationslose Befestigung mit der Möglichkeit, sie bei Bedarf zu lösen.

Hauptmerkmale der Erfindung sind in Anspruch 1 und in Anspruch 13 angegeben. Ausgestaltungen sind Gegenstand der Ansprüche 2 bis 12 sowie 14 bis 23.

Eine Klemmhülse zur lösbaren Halterung eines längsausgedehnten, beispielsweise rohr- oder stabförmigen Bauteils an einem mit wenigstens einem Durchgangs-Gewindeloch versehenen Träger, Balken, Rohr o.dgl., die einen in das Gewindeloch einschraubbaren Hülsenschaft aufweist, der in seinem Inneren eine mit dem Bauteil formgleiche Ausnehmung hat, in die das zu halternde Bauteil mit Schiebesitz einfügbar ist, zeichnet sich laut Anspruch 1 erfindungsgemäß durch eine insbesondere gleichförmige Aufweitung der Ausnehmung aus, die vom Kopf zum freien Ende des Hülsenschafts hin derart verläuft, daß ihre lichte Weite am freien Ende größer ist als das Außenmaß des eingefügten Bauteils und daß die in das Gewindeloch eingeschraubte Klemmhülse das eingefügte Bauteil entlang ihrer gesamten Spannlänge umspannt.

Der für diese Gestaltung benötigte Konstruktions- und Montageaufwand ist außerordentlich niedrig. Die kostengünstig herstellbare Klemmhülse braucht man ohne jedes Zusatzelement lediglich in das Gewindeloch des Trägers einzuschrauben, um das formgleiche Bauteil-Ende in der Ausnehmung des Hülsenschafts rasch und exakt zu haltern. Das Bauteil, gewöhnlich über seine gesamte Länge von konstantem Querschnitt, kann sicher gespannt, aber bei Bedarf leicht und beschädigungsfrei gelöst werden, z.B. um es zu entnehmen oder auszuwechseln.

In vorteilhafter Weiterbildung hat der Hülsenschaft ein Außengewinde und wenigstens einen achsparallelen Schlitz. Günstig sind zwei oder mehr achsparallele Schlitze, bevorzugt drei oder vier, so daß das zu halternde Bauteil an seinem passenden Ende von Halbschalen oder von drei oder mehr Federzungen umspannbar ist. Weil das konzentrisch erfolgt, ergibt sich zwangsläufig zugleich eine Zentrierung des Bauteils im Hülsenschaft und damit eine gleichmäßige Umfangsverteilung der Spannkräfte.

Der Hülsenschaft kann mit einem Kopf versehen sein, dessen Durchmesser den des Außengewindes überragt, wodurch ein Bund oder Flansch vorhanden ist, mit dem die Klemmhülsehülse an dem Träger satt anliegen kann. Das gewährleistet eine besonders feste und zuverlässige Verbindung. Ferner kann der Kopf hutmutterartig ausgebildet sein und an seinem Umfang Abflachungen, zum Ansatz eines Werkzeugs - namentlich eines Schlüssels - aufweisen, so daß die bevorzugt an ihrem freien Ende angefaste Klemmhülse mühelos in den Träger einschraub- und festziehbar ist. Wahlweise oder zusätzlich hat der Kopf an seiner Stirnseite einen Querschlitz, Kreuzschlitze oder wenigstens eine Vertiefung, z.B. ein Sechskant-Sackloch, damit man dort ein passendes Schraubwerkzeug ansetzen kann.

Vorzugsweise reicht die Ausnehmung des Hülsenschafts bis in den Kopf hinein. Dadurch kann das Bauteil-Ende auf größtmöglicher Länge eingespannt werden. Ohne Einbuße an Festigkeit wird zudem das Gewicht der Klemmhülse minimiert. Alternativ kann sich die Ausnehmung des Hülsenschafts durch den Kopf hindurch mit gleichem oder verringertem Durchmesser fortsetzen. In dem so gebildeten Durchgangsloch kann das obere Ende des zu halternden Bauteils - falls gewünscht - nach oben durchtreten, was z.B. bei Etagengittern anwendbar ist.

Bei einer anderen vorteilhaften Ausgestaltung kann der Hülsenschaft eine Einschraubmutter enthalten oder zumindest teilweise bilden. Weil mithin bei dieser Bauform kein Hülsenkopf vorhanden ist, kann man die Klemmhülse im Inneren eines dickeren Trägers in gewünschter Einschraubtiefe zum Verschwinden bringen. Das Gewindeloch läßt sich außen z.B. mit einem Blindverschluß, einer Zierkappe o.dgl. abschließen, bevorzugt bündig. Dabei, und auch wenn der Hülsenschaft eine Hülsenschraube enthält oder zumindest teilweise bildet, hat man die Möglichkeit, zusätzlich eine innere Schraubverbindung zu dem zu halternden Bauteil oder in diesem herzustellen.

Weil die Ausnehmung der Klemmhülse oder Innenspannschraube zum freien Ende des Hülsenschafts hin vorzugsweise gleichförmig aufgeweitet ist, überschreitet ihre lichte Weite am freien Ende das Außenmaß des Bauteils, wodurch dieses selbst bei geringem Fügespiel leicht einführbar ist. Vom freien Ende her ist der Hülsenschaft längsgeschlitzt, so daß Abschnitte bzw. Segmente davon an dem einzuspannenden Teil in der Art von Federzungen anliegen. Beim Einschrauben der Klemmhülse in den Träger bis zur planflächigen Anlage wird der Hülsenschaft gedehnt, weil die Gewindeflanken von Innen- und Außengewinde, d.h. von Klemmhülse und Gewindeloch, als schiefe Ebenen gegeneinander wirken. Infolge der so an den Gewindeflanken auftretenden Kraft verformen sich die Schaftabschnitte einwärts, ihr End-Innendurchmesser reduziert sich und die Ausnehmung verläuft nun glattzylindrisch. Das eingefügte Bauteil wird daher auf der ganzen Spannlänge der Klemmhülse gefaßt.

Diese Funktion der Klemmhülse ist mit jeder Gewindeart und mit normalen Gewindetoleranzen erzielbar; es wird kein Übermaß des Außengewindes gegenüber dem Gewindeloch benötigt. Vielmehr ist sogar ein Gewindespiel von z.B. einigen ZehntelMillimetern möglich. Die definierte Keilwirkung des Gewindes bewirkt die Spannkraft. Ist das Außengewinde ein Feingewinde, so erreicht man mit der dadurch gegebenen Kraftübersetzung eine große Klemmkraft. Umgekehrt erzielt man großes Spannspiel, wenn das Außengewinde ein Grobgewinde ist. Weitere Einflußgrößen sind die Wandstärke der Klemmhülse, ihre Elastizität sowie die Anzahl und Breite der Axiaischlitze, weiche die Hülsenabschnitte voneinander trennen.

Die Erfindung betrifft ferner gemäß Anspruch 13, für den selbständiger Schutz geltend gemacht wird, eine Klemmverbindung mit einem Träger, z.B. einem Rohr- oder Flachstahl-Körper mit wenigstens einem Gewindeloch zur Verschraubung mit einer ein rohr- oder stabförmiges Bauteil halternden Klemmhülse der vorgenannten Art. Die Richtung des bzw. jedes Gewindelochs im Träger bestimmt die Orientierung des bzw. jedes gehalterten Bauteils. Durch die überaus bequeme Verwendung sind sehr kurze Montagezeiten erzielbar. Vorteilhaft ist die Länge des Hülsenschafts höchstens gleich der Dicke des Rohr- bzw. Flachstahl-Körpers, so daß das freie Ende der Klemmhülse daraus nicht vorsteht, was die Vorteile gefälligen Aussehens und guter Reinigungsmöglichkeit erbringt. Zugleich werden dadurch Verletzungsgefahren vermieden.

Eine bevorzugte Gestaltung der Klemmverbindung sieht vor, daß der Rohr- bzw. Flachstahl-Körper eine Anzahl von Gewindelöchern in gleichmäßigen Abständen aufweist. Mit großem Vorteil kann man dies bei Geländern einsetzen, deren Handläufe oder Oberteile mit parallel abwärts führenden, rohr- oder stabförmigen Bauteilen versehen sind. Deren obere Enden sitzen in den Klemmhülsen, die in die Handläufe bzw. Oberteile eingeschraubt sind. Die Geländerstäbe oder -rohre sind mittels der Klemmhülsen im Winkel, insbesondere im rechten Winkel an dem Oberteil montierbar, allgemein z.B. einem Handlauf in Form eines Rohr- oder Flachstahl-Körpers. Dieser kann von den an einem Untergrund verankerbaren Stäben, Rohren o.dgl. oder auch von randseitigen Pfosten getragen sein. Solche Geländer gehören zu dieser Erfindung.

Bei einer anderen Weiterbildung ist die Klemmhülse mit dem Innengewinde einer Überwurfmutter verschraubbar, so daß sich geradlinige oder abgewinkelte Stab- oder Rohr verbindungen herstellen lassen. Dazu ist besonders vorteilhaft eine Doppelklemmhülse verwendbar, bei der zwei Klemmhülsen kopfseitig durch ein Mittel- oder Winkelstück miteinander einstückig verbunden sind. Für die Verbindung von Rohr-Elementen setzt man an bzw. in der Doppelklemmhülse Dichtringe ein; zwischen einem äußeren Dichtring und dem Hülsenschaft-Ende kann eine Ringscheibe eingefügt werden, um das Eindrücken der Schaftabschnitts-Enden in den Dichtring zu verhindern.

Die Einstellbarkeit der Klemmkraft ist besonders vorteilhaft bei der Verwendung von Klemmhülsen in Gleitlagerungen, Wellenkupplungen u.dgl. Für eine Wellen-Naben-Verbindung genügt es, eine Klemmhülse als Nabe z.B. in das Mittelloch eines Zahnrads einzuschrauben, um in ihrer Ausnehmung eine Welle zu fixieren.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
- Fig. 1: eine erfindungsgemäße Klemmhülse in Schrägansicht von unten,
- Fig. 2a: eine Seitenansicht einer Klemmhülse, mit einem Axialschnitt eines Trägers und teilweise eingesetzem Bauteil,
- Fig. 2b: eine vergrößerte Teilansicht entsprechend dem Kreis IIb in Fig. 2a,
- Fig. 2c: eine Seitenansicht wie in Fig. 2a, jedoch mit flächiger Anlage an dem Träger,
- Fig. 2d: eine vergrößerte Teilansicht entsprechend dem Kreis IId in Fig. 2c,
- Fig. 3a, 3b, 3c: je eine Schrägansicht einer Klemmhülse mit Träger und Bauteil in verschiede- nen Positionen,
- Fig. 4a: eine Schrägansicht eines Geländers mit erfindungsgemäßen Klemmverbinungen,
- Fig. 4b: eine Schrägansicht eines eines zu Fig. 4a ähnlichen Geländers,
- Fig. 5a: eine auseinandergezogene Schrägansicht einer Doppelklemmhülse und zu klemmender Bauteile,
- Fig. 5b: eine halbierte Schrägansicht der montierten Elemente von Fig. 6a,
- Fig. 6a: eine auseinandergezogene Schrägansicht einer Winkelstück-Doppelklemmhülse und zu klemmender Bauteile,
- Fig. 6b: eine Ansicht ähnlich Fig. 7a, jedoch bei abgewandelter Bauform,
- Fig. 7: eine Schrägansicht einer Klemmhülse sowie eines Zwischenrings vor und nach Montage an einem Rohr,
- Fig. 8: eine Schrägansicht, teilweise im Axialschnitt, einer Wellen-Naben-Verbindung,
- Fig. 9: eine Axialschnittansicht einer Wellenkupplung und
- Fig. 10a: je eine Axialschnittansicht zweier Gleitlagerbuchsen. und 10b

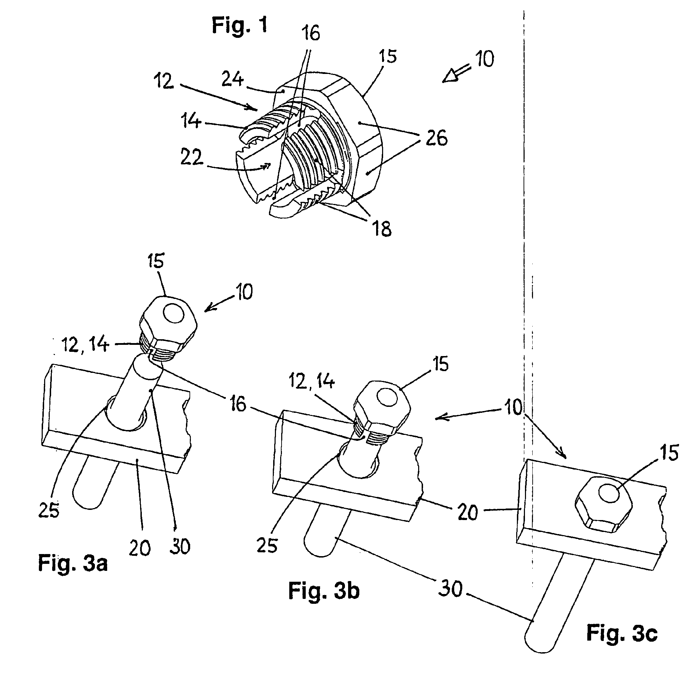

Den Aufbau einer Klemmhülse 10 ersieht man aus Fig. 1. Sie hat die Form einer Innenspannschraube. Ein Hülsenschaft 12 ist mit einem Außengewinde 14 und (im gezeichneten Ausführungsbeispiel) einem Kopf 15 versehen, der den Schaftdurchmesser überragt und zum Schaft 12 hin einen Bund bzw. eine Flanschfläche 24 aufweist. Vom freien Ende 13 des Schafts 12 her unterteilen achsparallele Schlitze 16 das Außengewinde 14 in Segmente, z.B. in vier Hülsenabschnitte 18.

Der Hülsenschaft 12 umschließt eine Ausnehmung 22, die sich bis in den Kopf 15 hinein erstreckt. Zum Einschrauben der Klemmhülse 10 hat der Kopf 15 an seinem Umfang Abflachungen bzw. Schraubflächen 26, an denen sich z.B. ein Maulschlüssel ansetzen läßt. Alternativ kann an der Stirnseite des Kopfes 15 ein Quer- oder Kreuzschlitz oder auch wenigstens eine Vertiefung vorgesehen sein, damit ein entsprechendes Schraubwerkzeug eingesteckt werden kann.

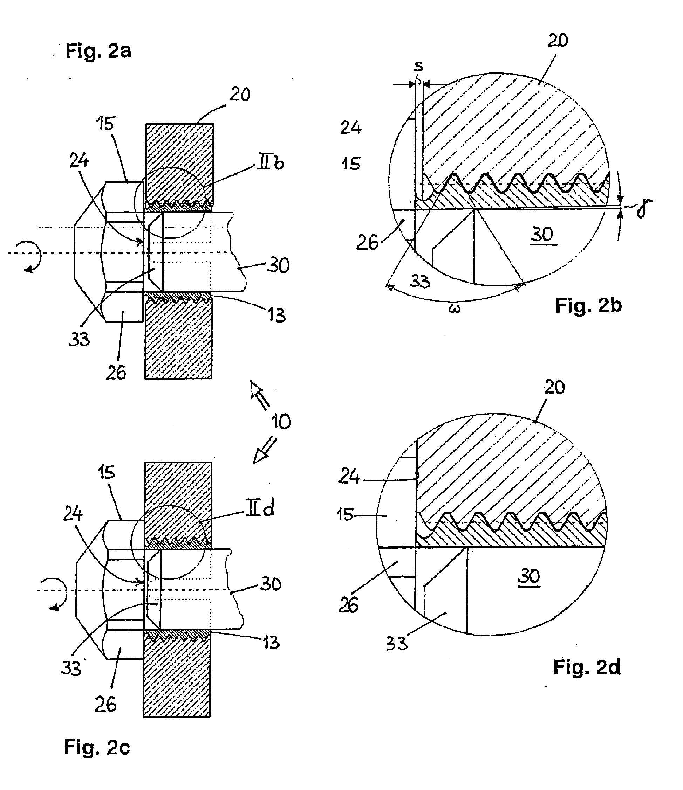

In die Ausnehmung 22 ist ein Bauteil 30 mit Schiebesitz einpaßbar, wozu die Kontur sowie die Abmessungen der Ausnehmung 22 einerseits und des Bauteils 30 andererseits aufeinander abgestimmt sind. Eine Aufweitung der Ausnehmung 22 vom Kopf 15 zum freien Ende 13 des Hülsenschafts 12 hin unterstützt die Einführbarkeit des Bauteils 30, das allgemein über seine ganze Länge konstanten Querschnitt hat. Weil die lichte Weite der Ausnehmung 22 am freien Ende 13 größer ist als das Außenmaß 39 des eingefügten Bauteils 30, umgreift die beim Einschrauben in das Gewindeloch 25 gedehnte und dadurch gespannte Klemmhülse 10 das eingefügte Bauteil 30 entlang ihrer ganzen Spannlänge, wie unten anhand von Fig. 2a bis 2d erläutert wird.

Beim praktischen Gebrauch kann die Klemmhülse 10 in einen (Flach-)Träger 20 z.B. von oben oder unten eingesetzt werden. Man steckt einen zu befestigenden Rohr- oder Stabkörper 30 durch das Gewindeloch 25 des Trägers 20 (Fig. 3a) und setzt die Klemmhülse 10 auf, so daß das obere Ende des Bauteils 30 möglichst tief in die Ausnehmung 22 des Hülsenschafts 12 reicht. Dann schraubt man die Klemmhülse 10 in das Gewindeloch 25 ein (Fig. 3b) und zieht sie mit einem geeigneten Werkzeug fest an, z.B. mit einem Sechskant- oder Maulschlüssel, bis der Bund bzw. Flansch 24 satt auf dem Träger 20 sitzt (Fig. 3c).

In der Position von Fig. 2a und 2b ist die Klemmhülse 10 nicht ganz in den Träger 20 - das kann ein Flachstahl-Körper sein - eingedreht, so daß zwischen der Flanschfläche 24 und der ihr zugewandten Fläche des Trägers 20 ein Spalt s vorhanden ist. Die Klemmhülse 10 befindet sich noch im ungespannten Zustand und die Konizität der Ausnehmung 22 ist an dem Keilwinkel γ erkennbar (Fig. 2b), den sie zur Oberfläche des Bauteils 30 einnimmt. Dieses hat am vorderen Ende eine Fase 33, was ein bequemes Einführen des Bauteils 30 zum Klemmhülsenkopf 15 hin weiter erleichtert.

Hat das Bauteil 30 die gewünschte Lage erreicht, so erfolgt die Fixierung durch volles Einschrauben der Klemmhülse 10 in das Gewindeloch 25, bis der Bund oder Flansch 24 des Kopfes 15 fest an der zugewandten Fläche des Trägers 20 anliegt (Fig. 2c und 2d). Aus Fig. 2d ersieht man, daß durch die Keilwirkung der Gewindegänge das untere bzw. innere Ende des Hülsenschafts 12 beim Einschrauben in das Gewindeloch 25 konzentrisch zusammengedrückt wird, was dank der achsparallelen Schlitze 16 möglich ist. Der Spalt s ist dabei auf Null zurückgegangen und die Schraubkraft hat den Hülsenschaft 12 verspannt, so daß seine Abschnitte 18 nun die Oberfläche des Bauteils 30 über die ganze Spannlänge satt anliegend umgreifen.

Zweckmäßig werden die Gewindedurchmesser und die Passungen bzw. das Fügespiel so aufeinander abgestimmt, daß die Klemmkraft einen festen Sitz gewährleistet, ohne eine plastische Verformung oder gar Beschädigung des geklemmten Körpers 30 zu bewirken. Dazu genügt es, wenn der Nenndurchmesser des Außengewindes 14 gleich jenem des Innengewindes 25 am Träger 20 ist. Durch die Form des Gewindes 14 und seine Bemessung, einen Kerbradius am Kopf-Gewindeansatz, die Hülsenwandstärke sowie die Anzahl und Breite der Schlitze 16 sind die Spannkraft sowie der Spannweg nach Bedarf beeinflußbar. Die Gewindesteigung ist wichtig; mit einem Feingewinde erzielt man große Spannkraft, mit einem Grobgewinde großes Spannspiel.

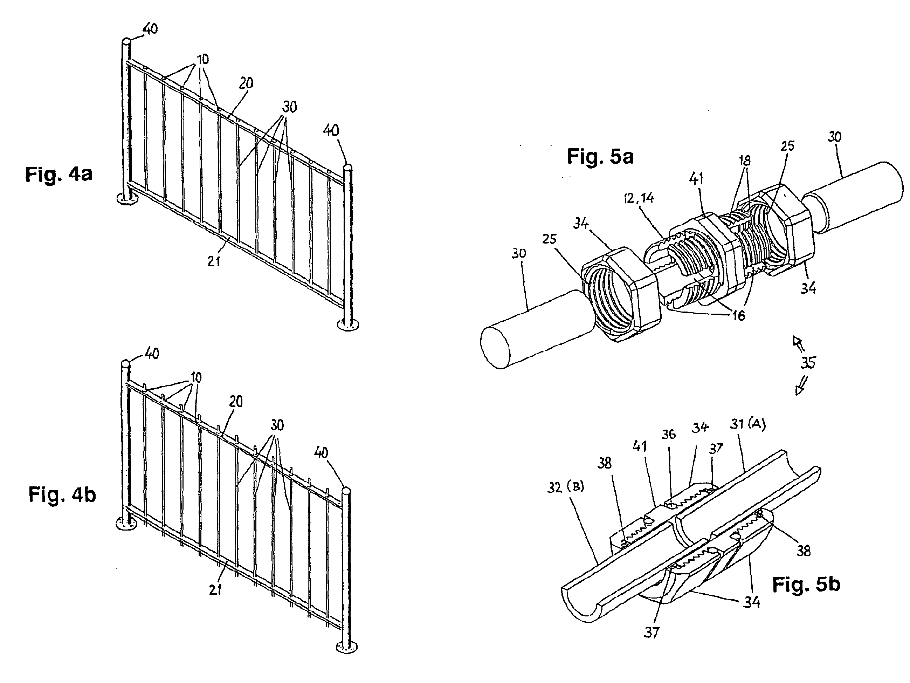

Eine praktische Anwendung geht aus Fig. 4a und 4b hervor. Im Beispiel der Fig. 4a stützen zwei Pfosten 40 einen Träger 20, der eine Reihe von Stäben 30 in Klemmhülsen 10 parallel haltert. Diese sind am unteren Ende in einem zweiten Träger 21 gefaßt, der ebenfalls an den Pfosten 40 befestigt ist. Fig. 4b zeigt eine abgewandelte Bauform eines solchen Geländers, bei der die Klemmhülsen 10 von den oberen Enden der Stäbe 30 durchsetzt werden und so den Träger 20 überragen. Entsprechend stehen die unteren Enden der Stäbe 30 an dem zweiten Träger 21 vor, bevorzugt um dasselbe Maß wie oben am Träger 20.

Bei einer Variante gemäß Fig. 5a und 5b sind zwei Klemmhülsen 10 kopfseitig am Mittelstück 41 einer Doppelklemmhülse 35 koaxial vereinigt. Eingesteckte Bauteile 30 werden durch Überwurfmuttern 34 geklemmt, deren Innengewinde 25 den geschlitzten Hülsenschaft 12 konzentrisch umspannt. Sind die Bauteile Rohre 31, 32, durch die ein Strömungsmedium fließen kann oder soll, so werden an der Doppelhülse 35 zweckmäßig Dichtringe 36 eingefügt und weitere Dichtringe 37 in die Überwurfmuttern 34 eingesetzt. Damit sich diese Dichtringe 37 nicht in die Schaftschlitze 16 eindrücken können, liegt an den Hülsen-Enden noch je eine ringförmige Zwischenscheibe 38 an.

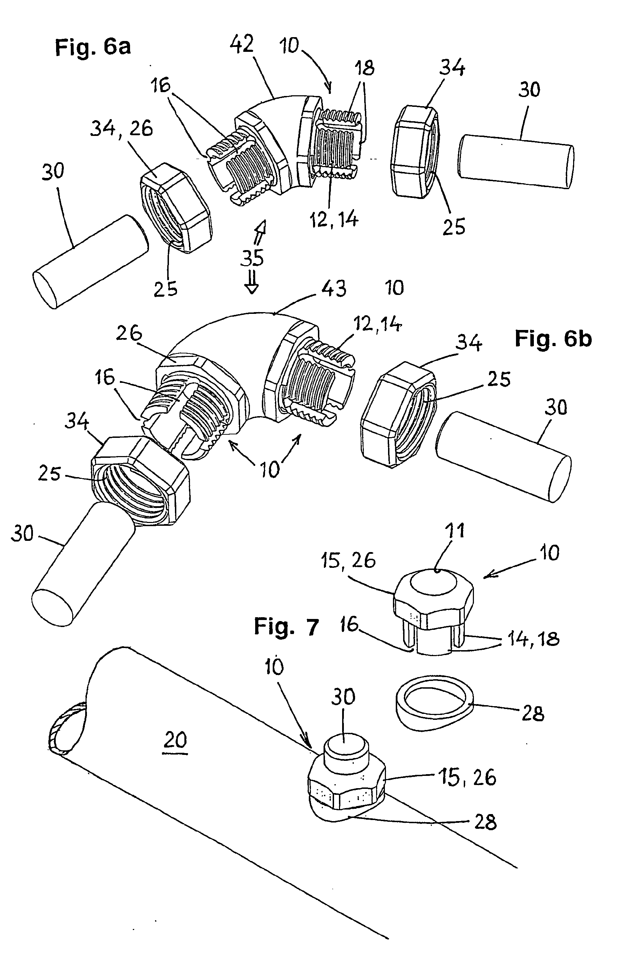

Wie aus Fig. 6a und 6b hervorgeht, können derartige Doppelklemmhülsen 35 auch abgewinkelt und dazu beiderseits an einem Winkelstück 42 bzw. 43 angeordnet sein. Fig. 6a zeigt eine stumpfwinkelige Ausbildung des Winkelstücks 42, während in Fig. 6b ein rechtwinkeliges Winkelstück 43 dargestellt ist. In beiden Fällen eignet sich die Doppelklemmhülse 35 zum Verbinden von massiven oder hohlen Bauteilen 30, vorzugsweise von Stäben oder Rohren.

Zum Anbringen der Klemmhülse 10 an rohrförmigen Trägern 20 ist es zweckmäßig, zwischen dem Rohrträger 20 und der Klemmhülse 10 eine Zwischenscheibe 28 vorzusehen (Fig. 7), die eine plane Außenfläche und eine gewölbte Innenfläche hat, wobei letztere dem Krümmungsradius des Rohrträgers 20 angepaßt ist.

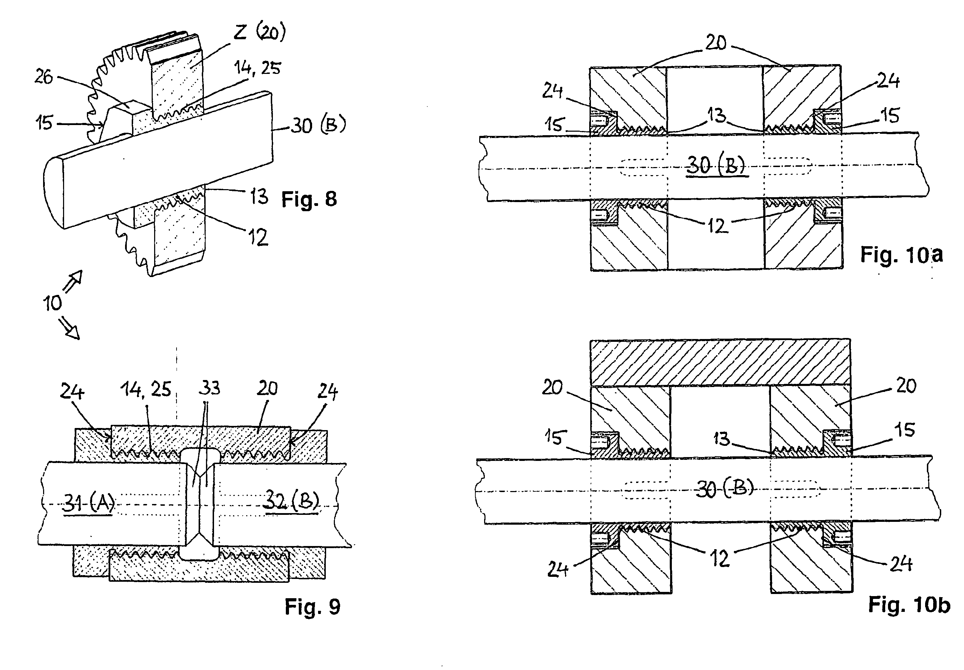

Bei einer in Fig. 8 gezeigte Wellen-Naben-Verbindung wird die Klemmhülse 10 mit ihrem Hülsenschaft 12 als Nabe in das schematisch dargestellte Zahnrad Z eingeschraubt, das dazu lediglich ein zentrisches Gewindeloch 25 benötigt. Eine Bearbeitung der Welle B ist nicht erforderlich; sie kann mit einem beliebigen Bereich in der Hülse 10 positioniert und fixiert werden. Die Klemmkraft ist über das Anzugsmoment der Hülse 10 mit dem großen Vorteil einstellbar, daß die Einstellbarkeit des zu übertragenden Drehmoments zugleich für eine Überlastsicherung ausgenutzt werden kann.

In Fig. 9 ist eine kraftschlüssige Wellenkupplung dargestellt. Der Träger 20 ist hier eine Gewindebuchse, in deren offene Enden je eine Klemmhülse 10 vorläufig einschraubbar ist, worauf man je eine Welle 31 / A bzw. 32 / B einfügt und die Hülsen 10 fest anzieht, so daß ihr Kopf 15 jeweils zur flächigen Anlage an der zugeordneten Stirnfläche der Gewindebuchse 20 kommt. Durch das Anzugsmoment wird das übertragbare Lastmoment festgelegt, und wiederum ist damit eine Überlastsicherung kombinierbar. Die Wellen können im Grenzfall in der bzw. jeder Klemmhülse 10 gleiten, und zwar ohne die Gefahr, daß andere Maschinenelemente beschädigt würden.

Eine weitere Anwendung der Innenspannschraube ist aus Fig. 10a und 10b ersichtlich. Für eine Lineargleitführung benutzt man zwei Klemmhülsen 10 als Gleitiagerbuchsen, die aus einem Gleitlagerpolymer oder einer Gleitlagerbronze bestehen und im Kopf 15 stirnseitig Sacklöcher für den Eingriff eines (nicht dargestellten) Werkzeugs haben. Die freien Enden 13 der Klemmhülsen 10 stehen einander gegenüber. Die Träger 20 können unabhängig (Fig. 10a) oder miteinander starr verbunden (Fig. 10b) sein. Durch einfaches Anziehen der bzw. jeder Gewindeverbindung läßt sich das Führungsspiel auf den aktuellen Bedarfsfall einstellen. Das ist gegenüber herkömmlichen Gleitlagerbuchsen vorteilhaft, denn diese haben entweder ein vorgegebenes Spiel zur Führungswelle oder sie sind durch unveränderliche Vorspannung spielfrei.

Die Erfindung ist nicht auf eine der vorbeschriebenen Ausführungsformen beschränkt, sondern vielfältig abwandelbar. So kann als Träger 20 auch eine - eventuell geschlitzte - Mutter oder Überwurfmutter 34 dienen, in welche die Klemmhülse 10 eingeschraubt wird, deren Hülsenschaft 12 bevorzugt am freien Ende angefast und mit Schlitzen 16 von wählbarer Anzahl und Breite versehen ist. Ferner können Ausnehmung 22 und Bauteil 30 - gleichartig - profiliert sein, etwa in Vier- oder Mehrkantform; z.B. kann man Polygonstäbe in Klemmhülsen 10 mit formgleicher Polygonausnehmung haltern.

Zusammenfassend ist festzustellen, daß eine erfindungsgemäße Klemmhülse 10 zur lösbaren Halterung eines z.B. rohr- oder stabförmigen Bauteils 30 an einem Träger 20, der wenigstens ein Durchgangs-Gewindeloch 25 aufweist, einen darin einschraubbaren Hülsenschaft 12 hat, der innen eine mit dem Bauteil 30 formgleiche Ausnehmung 22 besitzt, in die es mit Schiebesitz einfügbar ist. Der Hülsenschaft 12 weist ein Außengewinde 14 mit wenigstens einem achsparallelen Schlitz 16 auf, bevorzugt mit drei oder vier Schlitzen. Der Nenndurchmesser des Außengewindes 14 ist gleich dem des Gewindelochs 25. Ein Kopf 15 des Hülsenschafts 12 kann den Durchmesser des Außengewindes 14 mit seiner Flanschfläche 24 überragen. Am Umfang kann der Kopf 15 Formflächen (26) zum Ansatz eines Werkzeugs aufweisen. Die sich zum freien Ende 13 hin insbesondere konisch erweiternde Ausnehmung 22 reicht bis in den Kopf 15 hinein oder sie durchsetzt ihn mit gleichem oder verringertem Durchmesser. Bei einer Klemmverbindung mit einem Rohr- oder Flachstahl-Körper 20, der wenigstens ein dazu in einem Winkel verlaufendes Durchgangs-Gewindeloch 25 hat, kann man Klemmhülsen 10 ohne Kopf verwenden, deren Hülsenschaftlänge höchstens gleich der Dicke des Rohr- bzw. Flachstahl-Körpers 20 ist. Die zu halternden Bauteile 30 können Geländerstäbe sein, die mittels der Klemmhülse 10 insbesondere im rechten Winkel an dem Rohr- bzw. Flachstahl-Körper 20 montierbar sind. Doppelklemmhülsen 35, die koaxial verlaufen oder abgewinkelt sein können, eignen sich zur System-Verbindung von stab- oder rohrförmigen Bauteilen 30. Auch bei weiteren Anwendungen wie Gleitlagerungen, Wellen-Naben-Verbindungen, Wellenkupplungen u.dgl. ist die Einstellbarkeit der Klemmkraft besonders vorteilhaft.

### Bezugszeichenliste

- A, B: Bauteile (Stäbe, Rohre, Wellen)
- γ: Keilwinkel
- s: Spalt(breite)
- Z: Zahnrad

- 10: Klemmhülse
- 11: Durchgangsöffnung
- 12: Hülsenschaft
- 13: freies Ende
- 14: Außengewinde
- 15: Kopf
- 16: Schlitze
- 17: zentrisches Loch
- 18: Hülsenabschnitte / Segmente
- 20: Flachstahl-Körper / Träger(rohr)
- 21: (unterer) Träger
- 22: Ausnehmung
- 24: Flansch(fläche) Bund
- 25: Innengewinde
- 26: Abflachungen / Schraubflächen

- 28: Zwischenring
- 30: Bauteil / Stab / Rohr
- 31: Rohr / Welle (A)
- 32: Rohr / Welle (B)
- 33: Fase
- 34: Überwurfmutter
- 35: Doppelklemmhülse
- 36: Dichtring
- 37: Dichtring
- 38: Zwischenscheibe
- 39: Außenmaß
- 40: Pfosten
- 41: Mittelstück
- 42: Winkelstück
- 43: Winkelstück

## Patentansprüche

1. Klemmhülse (10) zur lösbaren Halterung eines längsausgedehnten Bauteils (30) von konstantem Querschnitt, z.B. eines Rohrs, Stabs o.dgl., an einem wenigstens ein Durchgangs-Gewindeloch (25) aufweisenden Haltekörper (20), z.B. einem Träger, Balken, Rohr o.dgl., mit einem Hülsenkopf (15), dessen Durchmesser den eines daran anschließenden Hülsenschafts (12) überragt, welcher ein mit dem Gewindeloch (25) schraubendes Außengewinde (14) hat, welcher an seinem dem Kopf (15) gegenüberliegenden freien Ende (13) wenigstens einen achsparallelen Schlitz (16) aufweist und welcher innen eine Ausnehmung (22) hat, in die das zu klemmende, formgleiche Bauteil (30) mit Schiebesitz einfügbar ist, **gekennzeichnet durch** gleichförmige Aufweitung der Ausnehmung (22) vom Kopf (15) zum freien Ende (13) des Hülsenschafts (12) hin derart, daß ihre lichte Weite am freien Ende (13) größer ist als das Außenmaß (39) des eingefügten Bauteils (30) und daß die in das Gewindeloch (25) eingeschraubte Klemmhülse (10) das eingefügte Bauteil (30) entlang ihrer gesamten Spannlänge umspannt.

2. Klemmhülse nach Anspruch 1, **dadurch gekennzeichnet, daß** die Ausnehmung (22) konisch oder gewölbt aufgeweitet ist.

3. Klemmhülse nach Anspruch 1 oder 2, **dadurch gekennzeichnet, daß** der Hülsenschaft (12) zwei oder mehr achsparallele Schlitze (16) aufweist, bevorzugt drei oder vier.

4. Klemmhülse nach einem der Ansprüche 1 bis 3, **dadurch gekennzeichnet, daß** der Kopf (15) hutmutterartig ausgebildet ist und an seinem Umfang Abflachungen (26) zum Ansatz eines Werkzeugs aufweist.

5. Klemmhülse nach einem der Ansprüche 1 bis 4, **dadurch gekennzeichnet, daß** der Kopf (15) an seiner Stirnseite zum Ansatz eines Werkzeugs einen Querschlitz, Kreuzschlitze oder eine Innenmehrkant-Vertiefung aufweist.

6. Klemmhülse nach einem der Ansprüche 1 bis 5, **dadurch gekennzeichnet, daß** der Kopf (15) zur axialen Aufnahme des Bauteils (30) ein zentrisches Loch (17) aufweist.

7. Klemmhülse nach Anspruch 6, **dadurch gekennzeichnet, daß** die Ausnehmung (22) als Sackloch bis in den Kopf (15) hinein reicht oder ein Durchgangsloch (17) ist.

8. Klemmhülse nach Anspruch 6 oder 7, **dadurch gekennzeichnet, daß** die Ausnehmung (22) den Kopf (15) mit gleichem oder verringertem Durchmesser durchsetzt.

9. Klemmhülse nach einem der Ansprüche 1 bis 8, **dadurch gekennzeichnet, daß** der Hülsenschaft (12) eine Einschraubmutter enthält oder zumindest teilweise bildet.

10. Klemmhülse nach einem der Ansprüche 1 bis 9, **dadurch gekennzeichnet, daß** der Hülsenschaft (12) eine Hülsenschraube enthält oder zumindest teilweise bildet.

11. Klemmhülse nach einem der Ansprüche 1 bis 10, **dadurch gekennzeichnet, daß** das Außengewinde (14) ein Feingewinde ist.

12. Klemmhülse nach einem der Ansprüche 1 bis 10, **dadurch gekennzeichnet, daß** das Außengewinde (14) ein Grobgewinde ist.

13. Klemmverbindung mit einem Träger, insbesondere einem Rohr- oder Flachstahl-Körper (20) mit wenigstens einem zu dem Träger (20) im spitzen oder rechten Winkel verlaufenden Durchgangs-Gewindeloch (25) zur Verschraubung mit einer ein beispielsweise rohr- oder stabförmiges Bauteil (30) halternden Klemmhülse (10) nach einem der Ansprüche 1 bis 12.

14. Klemmverbindung nach Anspruch 13, **dadurch gekennzeichnet, daß** die Hülsenschaftlänge der Klemmhülse (10) höchstens gleich der Dicke des Rohr- bzw. Flachstahl-Körpers (20) ist.

15. Klemmverbindung nach Anspruch 13 oder 14, **dadurch gekennzeichnet, daß** der Rohr- bzw. Flachstahl-Körper (20) eine Anzahl von Durchgangs-Gewindelöchern (25) in gleichmäßigen Abständen aufweist.

16. Klemmverbindung nach einem der Ansprüche 13 bis 15, **dadurch gekennzeichnet, daß** das bzw. jedes zu halternde Bauteil (30) ein Geländerstab ist, der mittels der Klemmhülse (10) im Winkel, insbesondere im rechten Winkel an dem Rohr- bzw. Flachstahl-Körper (20) montierbar ist.

17. Klemmverbindung nach einem der Ansprüche 13 bis 15, **dadurch gekennzeichnet, daß** die Klemmhülse (10) mit dem Innengewinde (25) einer Überwurfmutter (34) verschraubbar ist.

18. Klemmverbindung nach einem der Ansprüche 13 bis 17, **dadurch gekennzeichnet, daß** eine Doppelklemmhülse (35) vorhanden ist, bei der zwei Klemmhülsen (10) kopfseitig durch ein Mittel- oder Winkelstück (41; 42, 43) miteinander einstückig verbunden sind.

19. Klemmverbindung nach Anspruch 18, **dadurch gekennzeichnet, daß** zur Verbindung von Rohr-Elementen (31, 32) an bzw. in der Doppelklemmhülse (35) Dichtringe (36, 37) vorhanden sind.

20. Klemmverbindung nach Anspruch 19, **dadurch gekennzeichnet, daß** zwischen einem äußeren Dichtring (37) und dem Hülsenschaft-Ende eine Ringscheibe (38) eingefügt ist.

21. Klemmverbindung nach einem der Ansprüche 13 bis 20, **dadurch gekennzeichnet, daß** die eine Welle (B) umschließende Klemmhülse (10) mit ihrem Hülsenschaft (12) als Nabe in ein zentrisches Gewindeloch (25) einer Scheibe, eines Zahnrads (Z) o.dgl. einschraubbar ist.

22. Klemmverbindung nach einem der Ansprüche 13 bis 20, **dadurch gekennzeichnet, daß** für eine Wellenkupplung eine Gewindebuchse (20) vorhanden ist, in deren offene Enden je eine Klemmhülse (10) einschraubbar ist, die jeweils eine Welle (31/A bzw. 32/B) umschließt und fixiert, sobald ihr Kopf (15) an der zugeordneten Stirnfläche der Gewindebuchse (20) anliegt.

23. Klemmverbindung nach einem der Ansprüche 13 bis 20, **dadurch gekennzeichnet, daß** für eine Gleitlagerung zwei einander endseitig zugeordnete Klemmhülsen (10) in miteinander fluchtende Lagerkörper (20) einschraubbar sind.

## Claims

1. Clamping socket (10) to fix detachably a component of longitudinal extension with constant diameter, for example a tube, a bar or the like, on a supporting body (20) with at least one through threaded hole (25), for example a support, a beam, a tube or the like, with a socket head (15) of a diameter exceeding that of a socket shank (12) bonded thereto and that has an external thread (14) to be screwed down the threaded hole (25), with such socket shank having at its free end (13) opposite its head (15) at least one paraxial aperture (16), and in its interior a recess (22) into which the component of same shape to be clamped (30) is insertable by close sliding fit; **characterized by** the uniform expansion of the recess (22) from the head (15) to the free end (13) of the socket shank (12) being such that its clear width at the free end (13) is larger than the overall size (39) of the inserted component (30), and by the clamping socket (10) screwed down the threaded hole (25) clamping with its complete gripping length the inserted component (30).

2. Clamping socket according to Claim 1, **characterized by** the recess being expanded conically or curved.

3. Clamping socket according to Claims 1 or 2, **characterized by** the socket shank (12) having two or more paraxial apertures (16), preferably three or four.

4. Clamping socket according to one of the Claims 1 to 3, **characterized by** the head (15) being shaped like a cap nut and having flattening at its periphery to apply a tool.

5. Clamping socket according to one of the Claims 1 to 4, **characterized by** the head (15) having at its front side a transversal recession, cross recessions, or a multi-angle recess to apply a tool.

6. Clamping socket according to one of the Claims 1 to 5, **characterized by** the head 815) having a centric hole (17) for axial reception of a component (30).

7. Clamping socket according to Claim 6, **characterized by** the recess (22) reaching as a blind hole up into the head (15) or being a clearance hole (17).

8. Clamping socket according to Claims 6 or 7, **characterized by** the recess (22) receiving the head (15) with an identical or reduced diameter.

9. Clamping socket according to one of the Claims 1 to 8, **characterized by** the socket shank (12) containing or at least partially forming a screwed insert.

10. Clamping socket according to one of the Claims 1 to 8, **characterized by** the socket shank (12) containing or at least partially forming a socket screw.

11. Clamping socket according to one of the Claims 1 to 10, **characterized by** the external thread (14) being a fine-pitch thread.

12. Clamping socket according to one of the Claims 1 to 10, **characterized by** the external thread (14) being a coarse-pitch thread.

13. Clamping connection with a support, especially a tubular or flat steel body (20) with at least one through threaded hole (25) rectangular or at acute angle to the support (20) to screw down a clamping socket (10) according to one of the Claims 1 to 12 that fixes for example a tubular or bar-shaped component (30).

14. Clamping connection according to Claim 13, **characterized by** the socket shank length of the clamping socket (10) being maximally equal to the thickness of the tubular or flat steel body (20).

15. Clamping connection according to one of the Claims 13 or 14, **characterized by** the tubular or flat steel body (20) having a number of equally distant through threaded holes (25).

16. Clamping connection according to one of the Claims 13 to 15, **characterized by** the or each component (30) to be fixed being a railing bar mountable by means of the clamping socket (10) at an angle, especially right-angled, to the tubular or flat steel body (20).

17. Clamping connection according to one of the Claims 13 to 15, **characterized by** the clamping socket (10) being screwed down to the internal thread (25) of a union nut (34).

18. Clamping connection according to one of the Claims 13 to 17, **characterized by** a double clamping socket (35) being present in which two clamping sockets (10) are at their front sides connected to one unit by a middle piece or a bend (41; 42, 43).

19. Clamping connection according to Claim 19, **characterized by** packing rings (36, 37) being present on or in the double clamping socket (35) to connect tubular elements (31, 32).

20. Clamping connection according to Claim 19, **characterized by** a ring sheet (38) being inserted between an outer packing ring (37) and the socket shank end.

21. Clamping connection according to one of the Claims 13 to 20, **characterized by** the clamping socket (10) enclosing a shaft (B) being susceptible to be screwed down with its socket shank (12) as a hub into a centric threaded hole (25) of a washer, a gearwheel (Z) or the like.

22. Clamping connection according to one of the Claims 13 to 20, **characterized by** a thread bushing (20) being present for a shaft coupling to each free end of which one clamping socket can be screwed down that each embrace and fix a shaft (31/A or 32/B) as soon as its head (15) sits close to the associated front side of the thread bushing (20).

23. Clamping connection according to one of the Claims 13 to 20, **characterized by**, for a sliding embedding, two clamping sockets (10) associated to each other with their end sides being susceptible to be screwed down into mutually aligned bearing bodies (20).

## Revendications

1. Douille de serrage (10) pour maintenir de façon amovible un composant (30) à extension longitudinale de section constante, par exemple un tube, une barre ou analogue, sur un corps porteur (20) présentant au moins un trou de passage fileté (25), par exemple un support, une poutre, un tube ou analogue, avec une tête de douille (15), dont le diamètre dépasse celui d'un arbre de douille (12) s'y raccordant, lequel possède un filetage extérieur (14) se vissant avec le trou fileté (25), lequel filetage présente au moins une fente parallèle à l'axe (16) sur son extrémité libre (13) opposée à la tête (15) et possède à l'intérieur un creux (22) dans lequel le composant à serrer, de même forme (30), est insérable avec un ajustement appuyé, **caractérisée par** l'élargissement de même forme du creux (22) partant de la tête (15) jusqu'à l'extrémité libre (13) de l'arbre de la douille (12) de sorte que son diamètre intérieur à l'extrémité libre (13) est supérieur à la dimension hors tout (39) du composant inséré (30) et que la douille de serrage (10) vissée dans le trou fileté (25) serre le composant inséré (30) le long de toute sa longueur de serrage.

2. Douille de serrage selon la revendication 1, **caractérisée en ce que** le creux (22) est élargi de façon conique ou bombée.

3. Douille de serrage selon la revendication 1 ou 2, **caractérisée en** en ce que l'arbre de douille (12) présente deux ou plusieurs, de préférence trois ou quatre, fentes parallèles à l'axe (16).

4. Douille de serrage selon l'une quelconque des revendications 1 à 3, **caractérisée en ce que** la tête (15) est formée comme un écrou borgne et présente des méplats (26) sur sa périphérie pour appliquer un outil.

5. Douille de serrage selon l'une quelconque des revendications 1 à 4, **caractérisée en ce que** la tête (15) sur son côté frontal, présente une fente transversale, une fente en croix, ou un évidement à plusieurs pans creux pour appliquer un outil.

6. Douille de serrage selon l'une quelconque des revendications 1 à 5, **caractérisée en ce que** la tête (15) présente un trou central (17) pour recevoir axialement le composant (30).

7. Douille de serrage selon la revendication 10,
**caractérisée en** en ce que le creux (22) entre jusque dans la tête (15) sous forme de trou borgne ou constitue un trou de passage (17).

8. Douille de serrage selon la revendication 6 ou 7,
**caractérisée en** en ce que le creux (22) reçoit la tête (15) ayant un diamètre identique ou réduit.

9. Douille de serrage selon l'une quelconque des revendications 1 à 8, **caractérisée en ce que** l'arbre de douille (12) contient, ou au moins partiellement forme, un écrou à insertion.

10. Douille de serrage selon l'une quelconque des revendications 1 à 9, **caractérisée en ce que** l'arbre de douille (12) contient ou forme au moins partiellement une vis à douille.

11. Douille de serrage selon l'une quelconque des revendications 1 à 10, **caractérisée en ce que** le filetage externe (14) est un filetage fin.

12. Douille de serrage selon l'une quelconque des revendications 1 à 10, **caractérisée en ce que** le filetage extérieur (14) est un filetage grossier.

13. Raccord de serrage avec un support, en particulier un corps tubulaire ou plan (20) en acier ayant au moins un trou de passage fileté (25) se prolongeant selon un angle aigu ou droit vers le support (20) en vue d'un vissage avec une douille de serrage (10) selon l'une quelconque des revendications 1 à 12, maintenant par exemple un composant (30) de forme tubulaire ou en forme de barre.

14. Raccord de serrage selon la revendication 13, **caractérisé en ce que** la longueur de l'arbre de douille de la douille de serrage (10) est au maximum égale à l'épaisseur du corps tubulaire ou plan (20) en acier.

15. Raccord de serrage selon la revendication 13 ou 14, **caractérisé en** en ce que le corps tubulaire ou plan (20) en acier présente un certain nombre de trous de passage filetés (25) à des intervalles réguliers.

16. Raccord de serrage selon l'une quelconque des revendications 13 à 15, **caractérisé en ce que** chaque composant à maintenir (30) est une barre de garde-corps, qui peut être montée sur le corps tubulaire ou plan (20) en acier au moyen de la douille de serrage (10) selon un angle, en particulier selon un angle droit.

17. Raccord de serrage selon l'une quelconque des revendications 13 à 15, **caractérisé en ce que** la douille de serrage (10) peut être vissée avec le filetage intérieur (25) d'un écrou d'accouplement (34).

18. Raccord de serrage selon l'une quelconque des revendications 13 à 17, **caractérisé en ce qu'**une douille de serrage double (35) est présente, dans laquelle deux douilles de serrage (10) sont raccordées l'une à l'autre d'un seul tenant du côté de la tête par une pièce médiane ou coudée (41 ; 42, 43).

19. Raccord de serrage selon la revendication 18, **caractérisé en ce que** des bagues d'étanchéité (36, 37) sont présentes pour raccorder des éléments tubulaires (31, 32) sur ou dans la douille de serrage double (35).

20. Raccord de serrage selon la revendication 19,
**caractérisé en ce qu'**une rondelle annulaire (38) est insérée entre une bague d'étanchéité externe (37) et l'extrémité d'axe de douille.

21. Raccord de serrage selon l'une quelconque des revendications 13 à 20, **caractérisé en ce que** la douille de serrage (10) entourant une broche (B) avec son arbre de douille (12) en tant que moyeu, peut être vissée dans un trou fileté central (25) d'une rondelle, d'une roue dentée (Z) ou analogue.

22. Raccord de serrage selon l'une quelconque des revendications 13 à 20, **caractérisé en ce que**, pour un accouplement de broches, une douille taraudée (20) est présente, dans chacune des extrémités ouvertes de laquelle une douille de serrage (10) peut être vissée, qui entoure et fixe à chaque fois une broche (31/A ou 32/B) dès que sa tête (15) est appliquée sur la surface frontale associée de la douille taraudée (20).

23. Raccord de serrage selon l'une quelconque des revendications 13 à 20, **caractérisé en ce que**, pour un logement coulissant, deux douilles de serrage (10) associées l'une à l'autre du côté des extrémités peuvent être vissées dans des paliers (20) mutuellement alignés.
